# EUROPEAN PATENT APPLICATION

(11) **EP 4 480 660 A1**
(43) Date of publication of application: **25.12.2024**
(21) Application number: 22927350.3
(22) Date of filing: 23.12.2022
(51) Int. Cl.: B29B 9/12, C08J 11/06, B29B 17/04

(54) **MANUFACTURING METHOD AND DEVICE FOR RECYCLED MOLDING MATERIAL OF ALUMINUM FOIL COMPOSITE FILMS**

(30) Priority: 15.02.2022 JP 2022021572
(71) Applicant: Towa Chemical Co., Ltd., Saitama-shi, Saitama 339-0021 (JP)
(72) Inventor: TANAKUBO, Hiroshi, Saitama-shi, Saitama 339-0021 (JP); TANAKUBO, Shigehiro, Saitama-shi, Saitama 339-0021 (JP); KOYANAGI, Mitsuho, Tokyo 179-0084 (JP)
(74) Representative: Friese Goeden Patentanwälte PartGmbB
(86) International application number: PCT/JP2022/047509
(87) International publication number: WO 2023/157467

(57) **Abstract**

Provided is a manufacturing method and a device for recycled molding material of aluminum foil composite films that can collect and efficiently recycle no longer used aluminum foil composite films and that also greatly contribute to CO₂ emission reduction. The manufacturing method and device for recycled molding material of aluminum foil composite films, in which the mesh dimensions of a pulverizer screen mesh member for aluminum foil composite films are made larger than the mesh dimensions of a kneading extruder screen mesh member of a kneading extruder for gelling the pulverized aluminum foil composite film.

## Description

### TECHNICAL FIELD

The present invention relates to a method and an apparatus for producing a recycled moulding material from an aluminium foil composite film obtained by adhering an extrusion moulding film to the surface of an aluminium foil via an adhesive layer.

### BACKGROUND ART

The aluminium foil is known to have properties such as oxygen shielding properties, water resistance, oil resistance, radio wave shielding properties, radio wave reflecting properties, infrared reflecting properties, ultraviolet reflecting properties, light shielding properties, heat resistance and the like. The aluminium evaporation film and aluminium foil composite film have these properties of aluminium. These functions are widely applied to a packaging material for a food, chemical or the like over many years. The thickness of the aluminium foil used for the aluminium foil composite film is 6µ~0.2 mm according to JIS. The aluminium vapour deposition is such that aluminium metal particles are laminated, and the thickness of the aluminium vapour deposition layer is up to 100 nm, usually about 40~50 nm.

Aluminium is produced by refining bauxite using large amounts of electricity, but in Japan, there is no refining takes place at all because electricity is expensive. In Japan, a crude aluminium ingot that has been refined in a country other than Japan, where the cost of electricity is low, is imported and processed into a final aluminium product.

In view of the current state regarding the production of the above-mentioned aluminium, an unused aluminium product, a leading loss portion of the aluminium foil composite film at the time of production, an aluminium foil composite film with an incorrect printing content, etc., are used as a city-type aluminium resource.

One of the prior art for recovering aluminium-containing materials and recycling aluminium is a method for producing a moulding material pellet including a laminated film having an aluminium vapour-deposited layer (see, for example, Patent Literature 1). According to the method disclosed in Patent Literature 1, the moulding material pellet including the laminated film having the aluminium vapour-deposited layer is mixed with a cut product, a ground product or the like of a thermoplastic resin film having no aluminium vapour-deposited layer. A mixed material is melt-kneaded by a melt-kneading extruder and formed into pellets. The aluminium vapour-deposited film is a laminated film having at least two layers selected from a polyolefin-based film, a polyamide-based resin film and a polyester-based resin film. One layer of the laminated film has an aluminium vapour deposited layer. Further, a melt kneading extruder is constituted by a first kneading single-axis screw extruder and the second kneading multi-axis kneading extruder arranged in series in the first single-axis screw extruder.

Another conventional technique for recycling an aluminium-containing packaging material is disclosed as a "fuel oil resulting from thermal decomposition of a resin component by low temperature roasting and recovery of a residual aluminium foil" (see, for example, Non Patent Literature 1). In this prior art, the recovered aluminium foil composite film is pulverised, the pulverised composite film is heated and the laminated resin component is thermally decomposed to reduce the molecular weight and liquidised to separate the pulverised aluminium foil. The remaining shredded aluminium foil is used as aluminium base metal. The separated liquid resin component is fuel oil and is used as a heavy oil substitute, a reducing agent substitute or a coal substitute.

In the manufacturing method of the moulding material pellet using the laminated film having the aluminium vapour-deposited layer of the prior art described above, since the aluminium vapour-deposited layer is very thin compared to the aluminium foil, the aluminium content of the laminated film having the aluminium vapour-deposited layer is very small. That is, in general, the thickness of the aluminium foil used for the aluminium foil laminated film such as a packaging material, a decorative article and a building material is about 100 times the thickness of the aluminium vapour-deposited layer, and the recycling of the aluminium foil having the aluminium vapour-deposited layer has a very low aluminium recovery efficiency.

Another conventional method for recycling an aluminium-containing packaging material, namely "fuel oil resulting from thermal decomposition of a resin film", has an excellent aluminium recycling efficiency because it uses all of the aluminium foil composite films with an aluminium foil much thicker than the aluminium vapour deposited layer. This method has the advantage of consuming only about 3% of the energy compared to the case where only virgin aluminium is used, if only the recycling of aluminium is considered (see Non Patent Literature 2).

On the other hand, according to the above-described "fuel oil for the resin portion by low-temperature roasting and recovery of the remaining aluminium foil", the aluminium foil composite film is primarily 100% recycled. However, since the laminated resin component that is made into fuel oil as a recycled heavy oil substitute is then burned, CO₂ is emitted, so the CO₂ reduction effect is extremely limited.

Citation List

### Patent Literature

Patent literature 1: Japanese Patent No. 5577299

### Non Patent Literature

Non Patent Literature 1: "An investigation research report relating to promotion of realisation of low-carbon society" (page 21) published by the Incorporated Foundation Clean Japan Association, March,2011.
Non Patent Literature 2: "Global Warming Prevention is Determined by Aluminium" issued by Incorporated Association Japan Aluminum Society.

### Summary

In view of the above-mentioned problems of the prior art, the present invention has as its object to provide a method and an apparatus for producing a recycled moulding material from an aluminium foil composite film obtained by adhering an extrusion moulding film to the surface of an aluminium foil via an adhesive layer. 100% of the extrusion moulding film, the aluminium foil and the adhesive layer are efficiently shredded and recycled as moulding material.

### Solution to Problem

The first invention is a method for producing recycled moulding material from an aluminium foil composite film obtained by adhering an extrusion moulding film to the surface of an aluminium foil via an adhesive layer, comprising
a crushing step for crushing the aluminium foil composite film,
a crushing screen mesh member passing step for passing the crushed aluminium foil composite film through a crushing screen mesh member,
a kneading extrusion step for gelatinising the crushed aluminium foil composite film by applying heat and pressure, and
a kneading extrusion screen mesh passing step for passing the gelatinised aluminium foil composite film through a kneading extrusion screen mesh member comprising a kneading extrusion screen mesh member having an opening dimension smaller than the opening dimension of the crushing screen mesh member.

The second invention is an apparatus for producing mould material recycled from an aluminium foil composite film obtained by adhering an extrusion moulding film to the surface of an aluminium foil via an adhesive layer, comprising
crushing means for crushing the aluminium foil composite film,
crushing mesh means for passing through the crushed aluminium foil composite film,
kneading extrusion means for gelatinising the crushed aluminium foil composite film by applying heat and pressure, and
kneading extrusion screen means for passing the crushed aluminium foil composite film through a kneading extrusion screen mesh means having an opening dimension smaller than the opening dimension of the crushing screen mesh means.

Here, the opening dimension of the crushing screen mesh means and the kneading extrusion screen mesh means indicates the diameter of the screen mesh means when the opening of the screen mesh means is circular, and indicates the diameter of the inscribed circle when the screen mesh means is square.

Desirable aspects of the first invention are set out below. The heat in the kneading extrusion step includes heat generated by shear friction heat of the crushed aluminium foil composite film. The opening of the crusher screen mesh member is circular. The opening of the crushing screen mesh member is square. A bulking filler is added to the gelatinised aluminium foil composite film in the kneading extrusion step. A colouring agent is added to the gelatinised aluminium foil composite film in the kneading extrusion step. An antimicrobial substance is added to the gelatinised aluminium foil composite film in the kneading extrusion step. The extrusion moulding film is subjected to a uniaxial stretching treatment. The extrusion moulding film is subjected to biaxial stretching treatment.

Desirable aspects of the second invention are set out below. At least a part of the heating kneading extrusion means is generated by shear friction heat of the crushed aluminium foil composite film. The opening of the crushing screen mesh member is circular. The opening of the crushing screen mesh member is square. The kneading extrusion means is provided with a bulking filler to add a bulk to the gelatinised aluminium foil composite film. A colouring agent is added to the gelatinised aluminium foil composite film in the kneading extrusion means. An antimicrobial substance is added to the gelatinised aluminium foil composite sheet in the kneading extrusion means. The extrusion moulding film is subjected to a uniaxial stretching treatment. The extrusion moulding film is subjected to a biaxial stretching treatment.

### Advantageous Effects

According to the method and apparatus for producing recycled moulding material from an aluminium foil composite film obtained by adhering an extrusion moulding film to the surface of an aluminium foil via an adhesive layer, 100% of the aluminium foil and the adhesive layer are efficiently shredded and recycled as moulding material.

Hereinafter, a function and an effect of the method and the apparatus for producing recycled molding material from an aluminium foil composite film obtained by adhering an extrusion molding film to the surface of an aluminium foil via an adhesive layer are described in more detail. The aluminium foil contained in the aluminium foil composite film can be completely and efficiently recycled at low cost. The crushed particles of the aluminium foil composite film are heated to approximately 230°C by the shear friction heat and gelatinised. It is therefore possible to completely recycle the fully recovered aluminium foil in a reusable state as it is, without converting the aluminium foil to aluminium oxide in an oxygen-free state in the kneading extruder. However, it is not prevented from further providing a heating device, a cooling device and the like to control the temperature of the shredded particles of the aluminium foil composite film.

The enlarged size of the crushed particles of the aluminium foil composite film is increased to improve the crushing efficiency and reduce the cost of the recycled moulding material. If the individual dimension of the crushed particles of the aluminum foil composite film is larger than the gate dimension of the injection moulding machine mould using the aluminum foil composite film recycled moulding material, the crushed particles of the aluminum foil cannot pass through the gate of the injection moulding machine mold, and "gate clogging" occurs at the gate.

In order to prevent this gate clogging, it is considered necessary to make the dimension of the crushed particles of aluminium foil contained in the aluminium foil composite film recycled moulding material smaller than the gate dimension. On the other hand, when an attempt is made to make the dimension of the crushed particles of aluminium foil contained in the aluminium foil composite film recycled moulding material equal to or smaller than the predetermined dimension, i.e. the gate dimension or smaller, it is considered that it is necessary to make the dimension of the crushed particles of aluminium foil composite film equal to or smaller than the predetermined gate dimension.

However, the present inventors have found the following by an experiment. When the extrusion moulding film is crushed while being adhered to the surface of the aluminium foil of the laminated aluminium foil composite film, the aluminium foil of the crushed particles of the aluminium foil composite film is planar. However, when the crushed particles of the aluminium foil composite film are heated and kneaded, such as at 230°C, the synthetic resin constituting the extrusion-molded film is softened and gelatinised. As a result, the synthetic resin constituting the extrusion-molded film contracts and deforms, and the crushed aluminium foil particles adhered by the adhesive layer are also shrunk together with the synthetic resin so that the outer diameter is reduced. Meanwhile, according to the Internet's Wikipedia "aluminium foil", one with a purity of 99.3% or more is used in general applications such as decoration, building materials and packaging. On the other hand, "Total Aluminium" (page 55, lines 3 to 5), published by the Japan Industrial Newspaper Company, describes that the tensile strength of an aluminium alloy is drastically reduced at 200°C or higher, and the flexural modulus is also reduced, while a synthetic material gels at this temperature. In the kneading extrusion step the temperature change in the flexural modulus is intelligently combined with the diameter reduction due to the gelation of the extruded film.

This technical phenomenon is used to make the opening dimension of the crusher screen mesh member of the aluminium foil composite film crusher, which determines the dimensions of the aluminium foil composite film crushed particles, larger than the opening dimension of the injection moulding machine gate, that is, the opening dimension of the kneading extruder screen mesh.

In order to recognise how industrially advantageous a larger size of the crushing screen mesh is, the inventors investigated a relationship between the opening size of the crushing screen mesh and an amount of crushed particles under the predetermined time (20 seconds) by using the aluminium foil composite film.

| | | | | |
|---|---|---|---|---|
| Opening size: | 1.0 mm | 1.2 mm | 1.5 mm | 3.0 mm |

Amount of crushed particles:

| | 0.31 kg | 0.38 kg | 0.56 kg | 3.08 kg |
|---|---|---|---|---|
| Comminution ratio: | 1.0 | 1.22 | 1.81 | 9.94 |

As a result of this experiment, the more the size of the crushed particle increases, the more the crushing efficiency increases, i.e. the more the crushing power consumption decreases and the crushing time decreases. It is confirmed that the more the opening dimension of the crushing screen mesh is large, the more the crushing efficiency is advantageous.

The extrusion moulding film adhered to the surface of the aluminium foil via an adhesive layer is crushed without abrasion of the extrusion moulding film from the aluminium foil, namely while the extrusion moulding film is maintained in an adhered state to the surface of the aluminium foil via the adhesive layer. As a result, the extrusion molding film is strongly adhered to the surface of the aluminum foil, and then a molding using the molding material recycled from the aluminum foil composite film is stable.

### Brief Description of Drawings

[Fig. 1] Fig.1 is a cross-sectional view of an aluminium foil composite film.
[Fig.2] Fig.2 is a system structure diagram of an aluminium foil composite film recycling apparatus used of an embodiment.
[Fig.3] Fig.3 is a construction explanation diagram of an aluminium foil composite film crusher of the embodiment.
[Fig.4] Fig.4 is a construction explanation diagram of the granulating unit.
[Fig.5] Fig.5 is a top view of the kneading extrusion screen mesh member of the embodiment.
[Fig.6] Fig.6 is an enlarged view of an area shown by dotted line VI in Fig. 5.

### DESCRIPTION OF EMBODIMENTS

### Example

The apparatus for producing a molding material recycled from an aluminum foil composite film obtained by adhering an extrusion molding film to the surface of an aluminum foil via an adhesive layer, compresses and gelatinizes the aluminum foil composite film. The gelatinized aluminum foil composite film is mixed with other materials, such as other molding materials, colouring agents and the like, if necessary.

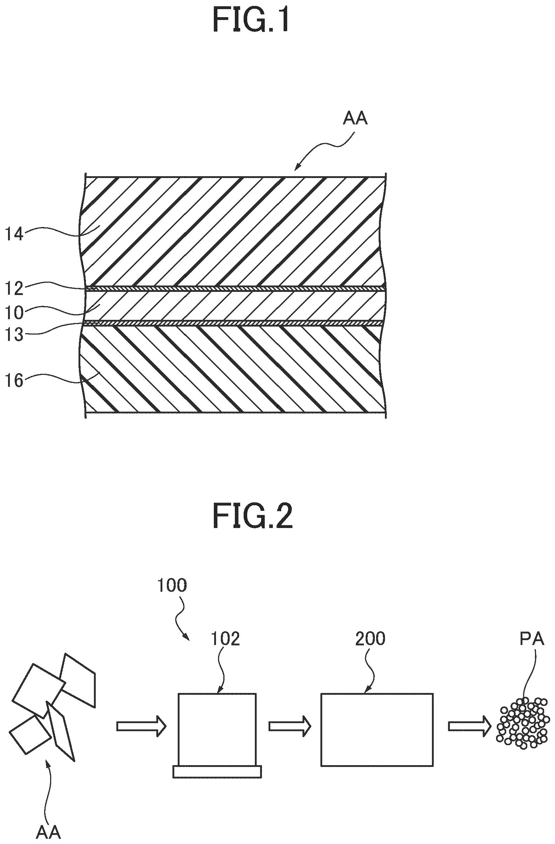

(RECYCLED MATERIAL) In the embodiment of the present invention, the recycled aluminium foil composite film AA having a thickness of about 100 µm as shown in Fig. 1. The aluminium foil composite film to be recycled is an article containing an aluminium foil and the like, which becomes unnecessary by changing the printing content of the aluminium foil composite film, the edge portion, and the leading loss portion, which originate at the time of manufacturing the aluminium foil composite film product.

The aluminium foil composite film AA comprises an aluminium foil 10 having a thickness of about 8 µm and an outer surface synthetic resin layer 14 such as polyethylene, polypropylene, nylon, PET or the like having a thickness of about 62 µm, including the adhesive layer 12, on an outer surface (top surface in FIG. 1) of the aluminium foil 10 as shown in FIG. 1. A product name, filler specification and the like are printed on the outer surface of a synthetic resin layer 14. The resin forming the resin layer 14 is an extrusion moulded film. The resin forming the resin layer 14 may be subjected to uniaxial direction stretching treatment or biaxial direction stretching treatment. The inner surface (lower surface in FIG. 1) of the aluminium foil composite film AA has an adhesive layer 13 and an inner heat-sealable synthetic resin layer 16 such as polyethylene or polypropylene. The inner heat-sealable synthetic resin layer 16 can be heat-sealed at a low temperature, and when the opposing portions are heated to about 180°C, both are welded together to seal the package.

(MOULDING MATERIAL MANUFACTURING APPARATUS FOR RECYCLING ALUMINIUM FOIL COMPOSITE FILM) The molding material manufacturing apparatus 100 as shown in FIG. 2 comprises a crushing section 102 for crushing the cut pieces of the recycled aluminium foil composite film AA, and a granulating section 200 for mixing and kneading other materials with the crushed particles CA of the aluminium foil composite film AA supplied from the crushing section 102 to form a recycled molding material pellet PA.

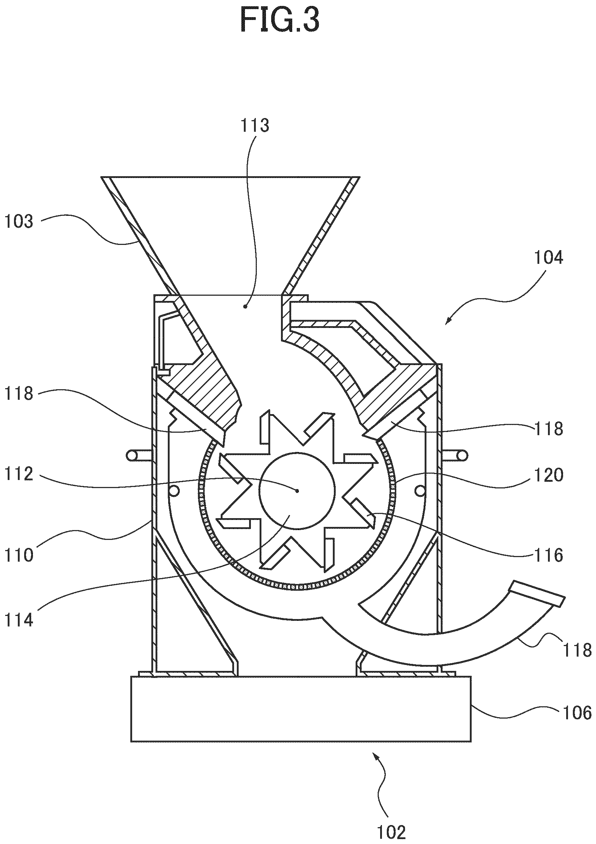

(CRUSHING UNIT) As shown in FIG. 3, the crushing section 102 is constructed by placing the crusher 104 including the collecting hopper 103 on the frame 106. For example, an aluminium foil composite film AA cut into a square shape of about 25 cm on one side is fed into the collecting hopper 103.

(SHREDDER) As shown in FIG. 3, the shredder 104 is provided with a charging port 113 communicating with the collecting hopper 103 on the upper portion of the housing 110. A rotor 114, in which the axis of rotation 112 is made horizontal, is disposed near the centre of the housing 110. A plurality of cemented carbide blades 116 are attached to the periphery of the rotor 114 at equal intervals. A pair of fixed blades 118 is attached to a portion of the lower end portion of the charging port 113 and outside the rotational movement area of the cemented carbide blades 116. A crushing screen mesh member 120 is disposed outside the rotational movement region of the cemented carbide blade 116 along a rotational movement region of the cemented carbide blade 116 in a portion excluding the charging port 113 and the fixed blade 118. The crushing screen mesh member 120 is a punched member provided with a plurality of circular holes having a diameter of 5.0 mm, i.e. a plurality of crushing discharge openings, on a steel plate having a thickness of about 3.0 mm, and is curved along the outer periphery of the rotational movement region of the cemented carbide blade 116. Alternatively, a punching member provided with a plurality of circular holes having a diameter of 2.0 mm may be used.

In the crusher 104, the aluminium foil composite film AA charged by the rotation of the rotor 114 is repeatedly cut and crushed by the cemented carbide blade 116 and the fixed blade 118. The only particles of the aluminium foil composite film crushed in the crusher 104 that have a dimension that can pass through the circular holes of the crushing screen mesh member 120 are discharged from the crusher 104. The particles of the aluminium foil composite film crushed in the crusher 104 but not discharged from the crusher 104 are repeatedly cut by the cemented carbide blade 116 and the fixed blade 118 until the size of the particles of the aluminium foil composite film crushed in the crusher 104 can pass through the circular holes. The crusher 104 is a "BO-360" of HORAI PLC or the like. The crushing screen mesh member 120, which is a punching member, can be replaced with the wire mesh member.

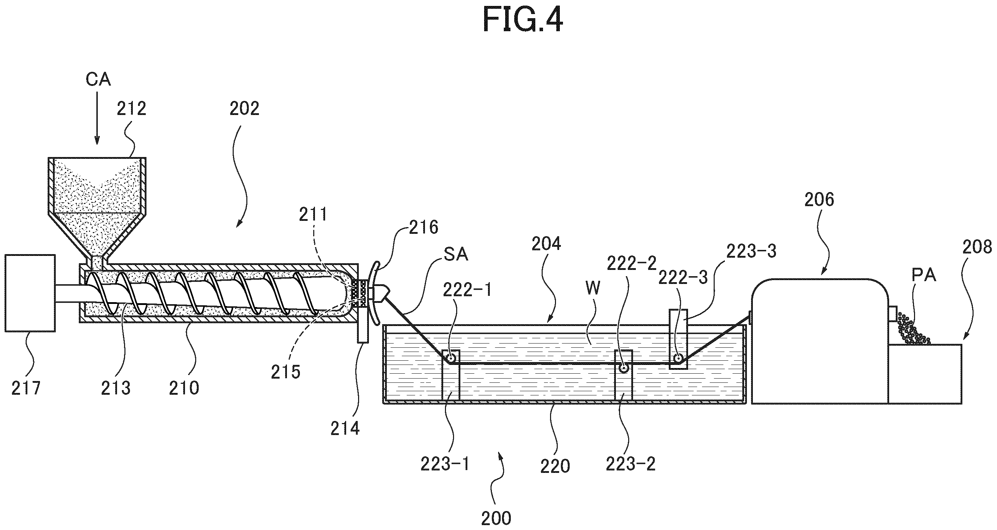

(GRANULATING SECTION) As shown in FIG. 4, the granulating section 200 sequentially arranges a kneading extruder 202, a kneading extruder screen mesh member 211, a foreign matter removing device 214, a die 216, a cooling device 204, a take-up cutter device 206 and a pellet collecting device 208.

(KNEADING EXTRUDER) As shown in FIG. 4, the kneading extruder 202 includes a cylinder 210, a drive motor portion 217 with a speed reducer disposed on the starting end side of the cylinder 210, a kneading extruder hopper 212 disposed above the starting end side of the cylinder 210 for receiving the crushed particles CA of the aluminium foil composite film AA supplied from the crushing portion 102, and a screw member 213 rotated by the drive motor portion 217 with the speed reducer in the cylinder 210.

In the kneading extruder 202, the crushed particles CA of the aluminium foil composite film AA supplied from the kneading extruder hopper 212 are sheared, kneaded, compressed, gelled and homogenised. The gelled particles CA of the aluminium foil composite film AA are extruded from the kneading extruder 202 through the kneading extruder screen member 211.

The kneading extruder 202 may be provided with an additive unit (not shown in the figure) for supplying an additive to the gelled particles CA of the aluminium foil composite film AA, if necessary. The additive is shown to be an antioxidant such as a phenol-based or phosphorus-based antioxidant, an antibacterial agent, a colouring material or the like.

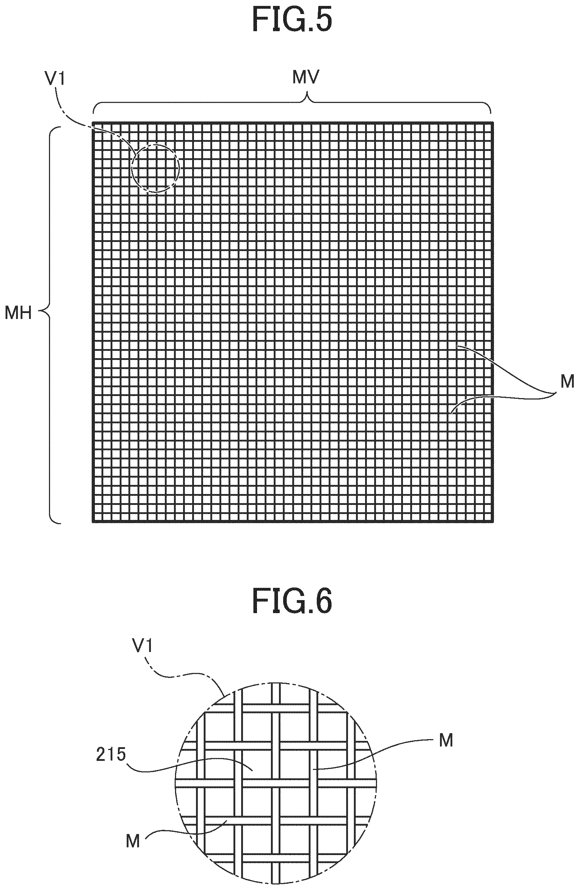

(KNEADING EXTRUDER SCREEN MEMBER) The kneading extruder screen member 211 is disposed at a terminal end of the cylinder 210. As shown in FIGS. 5 and 6, the kneading extruder screen member 211 includes a vertical line group MV in which a linear metal wire M made of stainless steel and having a diameter of 0.05 mm is arranged in parallel at a centre pitch of 2.0 mm, and a horizontal line group MH in which the metal wire M is arranged side by side at a centre pitch of 2.0 mm orthogonal to the vertical line group MV. As shown in FIG. 6, the vertical line group MV and the horizontal line group MH are plain weave knitted by a weaving method which alternately crosses with a step delay, and a square opening is formed. A punched hole member of the metal plate can be substituted for the kneading extruder screen mesh member 211, which is a wire mesh member.

(FOREIGN MATTER REMOVING DEVICE) The foreign matter removing device 214 has a foreign matter removing screen mesh member 215 which is a wire mesh member, and removes foreign matter such as an insoluble resin, sand and a metal piece mixed in the gelled particles CA of the aluminium foil composite film AA through the foreign matter removing screen mesh member 215. The foreign matter removing screen mesh member 215, which is a wire mesh member, can be replaced by a punched hole member of the metal plate.

(DIE) The die 216 has one or more nozzles (not shown in the figure) and forms a strand-shaped composite film strand SA. The number of strands SA to be formed varies according to the amount of particles CA of the aluminium foil composite film AA supplied from the crushing section 102, one to 40 being an example of the number of strands SA.

(COOLING APPARATUS) As shown in FIG. 4, the cooling device 204 includes a water tank 220. A plurality of guide rollers 222-1 to 222-3 for guiding a strand-shaped composite film strand SA are disposed in the water tank 220. Desirably, the first guide roller 222-1 is configured to be movable along the running direction of the composite film strand SA. The first guide roller 222-1 is rotatably supported by the first roller support body 223-1 provided at the bottom of the water tank 220. The second guide roller 222-2 is rotatably supported by a second roller support body 223-2 provided at the bottom of the water tank 220. The third guide roller 222-3 is rotatably supported by a third roller support body 223-3 provided at the top of the water tank 220. The strand-shaped composite film strand SA extruded from the die 216 is gradually thinned by the tensile force of a take-up cutter device 206 (described later) immediately after being extruded from the die 216, and then cooled and solidified after entering the cooling water W

(TAKE-UP CUTTING DEVICE) The take-up cutting device 206 cuts the composite film strand SA by a rotary blade (not shown in the figure) by a publicly known strand cutting device (not shown in the figure) to form a pellet shape of the predetermined size to form a recycled moulding material pellet PA.

(PELLET COLLECTING DEVICE) The pellet collecting device 208 measures the recycled moulding material pellet PA supplied from the take-up cutting device 206 so that the recycled moulding material pellet PA is filled into a container or recycled moulding material pellet packages are prepared.

(MODIFICATION 1 OF THE EMBODIMENT) A compression molding machine is installed at the outlet of the die 216, and the gelled particles CAof the aluminium foil composite film AA are weighed and charged directly into the compression molding machine.

(MODIFICATION 2 OF THE EMBODIMENT) A sheet molding machine is connected to the discharge portion of the kneader 202, and the gelled particles CA of the aluminium foil composite film AA are used as the sheet molding material.

### Reference Signs List

AA : aluminium foil composite film
CA: crushed particle of aluminium foil composite film
PA: recycled moulding material pellet
SA: composite film strand
MV : vertical wire group
MH : horizontal wire group
10 : aluminium foil
14 : outer surface resin layer
16 : inner heat-sealable surface synthetic resin layer
100 : moulding material manufacturing apparatus
102 : crushing section
104 : crusher
116 : cemented carbide blade
118 : fixed blade
120 : crushing screen mesh member
200 : granulating section
202 : kneading extruder
204 : cooling device
206 : take-up cutter device
211 : kneading extruder screen mesh member

## Claims

1. A method of producing recycled moulding material from an aluminium foil composite film obtained by adhering an extrusion moulding film to the surface of an aluminium foil via an adhesive layer, comprising
a crushing step for crushing the aluminium foil composite film,
a crushing screen mesh member passing step for passing the crushed aluminium foil composite film through a crushing screen mesh member,
a kneading extrusion step for gelatinising the crushed aluminium foil composite film by applying heat and pressure, and
a kneading extrusion screen mesh passing step for passing the gelatinised aluminium foil composite film through a kneading extrusion screen mesh member comprising a kneading extrusion screen mesh member having an opening dimension smaller than the opening dimension of the crushing screen mesh member.

2. The method of producing a recycled moulding material from an aluminium foil composite film according to claim 1, wherein the heat in the kneading extrusion step includes heat generated by shear friction heat of the crushed aluminium foil composite film.

3. The method of producing a recycled moulding material from an aluminium foil composite film according to claim 1, wherein the opening of the crusher screen mesh member is circular.

4. The method of producing a recycled moulding material from an aluminium foil composite film according to claim 1, wherein the opening of the crushing screen mesh member is square.

5. The method of producing a recycled moulding material from an aluminium foil composite film according to claim 1, wherein a bulking filler is added to the gelatinised aluminium foil composite film in the kneading extrusion step.

6. The method of producing a recycled moulding material from an aluminium foil composite film according to claim 1, wherein a colouring agent is added to the gelatinised aluminium foil composite film in the kneading extrusion step.

7. The method of producing a recycled moulding material from an aluminium foil composite film according to claim 1, wherein an antimicrobial substance is added to the gelatinised aluminium foil composite film in the kneading extrusion step.

8. The method of producing a recycled moulding material according to claim 1, wherein the extrusion moulding film is subjected to a uniaxial stretching treatment.

9. The method of producing a recycled moulding material from an aluminium foil composite film according to claim 1, wherein the extrusion moulding film is subjected to biaxial stretching treatment.

10. An apparatus for producing mould material recycled from an aluminium foil composite film obtained by adhering an extrusion moulding film to the surface of an aluminium foil via an adhesive layer, comprising
crushing means for crushing the aluminium foil composite film,
crushing mesh means for passing through the crushed aluminium foil composite film,
kneading extrusion means for gelatinising the crushed aluminium foil composite film by applying heat and pressure, and
kneading extrusion screen mesh means for passing the crushed aluminium foil composite film through a kneading extrusion screen mesh means having an opening dimension smaller than the opening dimension of the crushing screen mesh means.

11. The apparatus for producing mould material recycled from an aluminium foil composite film according to claim 10, wherein at least a part of the heating kneading extrusion means is generated by shear friction heat of the crushed aluminium foil composite film.

12. The apparatus for producing mould material recycled from an aluminium foil composite film according to claim 10, wherein the opening of the crushing screen mesh member is circular.

13. The apparatus for producing mould material recycled from an aluminium foil composite film according to claim 10, wherein the opening of the crushing screen mesh member is square.

14. The apparatus for producing mould material recycled from an aluminium foil composite film according to claim 10, wherein the kneading extrusion means is provided with a bulking filler to add a bulk to the gelatinised aluminium foil composite film.

15. The apparatus for producing mould material recycled from an aluminium foil composite film according to claim 10, wherein a colouring agent is added to the gelatinised aluminium foil composite film in the kneading extrusion means.

16. The apparatus for producing mould material recycled from an aluminium foil composite film according to claim 10, wherein an antimicrobial substance is added to the gelatinised aluminium foil composite sheet in the kneading extrusion means.

17. The apparatus for producing mould material recycled from an aluminium foil composite film according to claim 10, wherein the extrusion moulding film is subjected to a uniaxial stretching treatment.

18. The apparatus for producing mould material recycled from an aluminium foil composite film according to claim 10, wherein the extrusion moulding film is subjected to a biaxial stretching treatment.
